# EUROPÄISCHE PATENTSCHRIFT

(11) **EP 2 189 774 B1**
(45) Veröffentlichungstag und Bekanntmachung des Hinweises auf die Patenterteilung: **31.12.2014**
(21) Anmeldenummer: 08020222.9
(22) Anmeldetag: 20.11.2008
(51) Int. Cl.: G01L 9/00, G01L 19/04

(54) **Verfahren zur Detektion und zur Kompensation einer schnellen Temperaturänderung an einer Druckmesszelle**
Method of detecting and compensating for a quick temperature change to a pressure measurement cell
Procédé destiné à la détection et à la compensation d'un changement de température rapide sur une cellule de mesure de pression

(43) Veröffentlichungstag der Anmeldung: 26.05.2010
(73) Patentinhaber: VEGA Grieshaber KG, 77709 Wolfach (DE)
(72) Erfinder: Jacob, Jörn, 77709 Kirnbach (DE); Gruhler, Holger, 78609 Tuningen (DE)
(74) Vertreter: Patentanwälte Westphal, Mussgnug & Partner

(56) Entgegenhaltungen:
- EP-A- 0 480 170
- EP-A- 1 596 174
- WO-A-2008/001602
- DE-A1- 3 212 218
- DE-A1- 4 142 101
- US-A- 3 905 237
- US-A- 5 770 802
- US-A1- 2007 209 443

## Beschreibung

Die Erfindung betrifft ein Verfahren zur Detektion und zur Kompensation einer schnellen Temperaturänderung an einer Druckmesszelle gemäß Oberbegriff des Patentanspruchs 1.

Eine Druckmesszelle ist beispielsweise aus der EP 1 186 875 B1 bekannt.

Eine solche Druckmesszelle besteht in der Regel aus einem Grundkörper und einer Messmembran, wobei am Grundkörper eine flache Ausnehmung vorgesehen ist, die von der Membran vollständig überdeckt wird und zusammen mit der Ausnehmung eine Druckkammer bildet. In der Ausnehmung und auf der Innenseite der Membran sind Elektroden vorgesehen, die zusammen einen Messkondensator bilden, dessen Messsignal ausgewertet wird. Um Störeffekte, wie beispielsweise Temperatur oder Drift zu kompensieren, wird neben dem Messkondensator ein Referenzkondensator angeordnet.

Befindet sich eine solche Druckmesszelle im thermischen Gleichgewicht mit ihrer Umgebung, kann die Temperaturabhängigkeit der Druckmessung mittels eines auf der Rückseite des Grundkörpers angeordneten Temperatursensors kompensiert werden. Eine schnelle Temperaturänderung, beispielsweise ein sogenannter Thermoschock kann zu Verspannungen in der Membran der Druckmesszelle führen, die aufgrund einer dadurch bewirkten Auslenkung der Messmembran falsche Messwerte zur Folge haben. Die Verspannungen der Membran resultieren aus einem Temperaturunterschied zwischen einem auf die Membran der Druckmesszelle einwirkenden Medium und dem von dem Medium abgewandten, mit der Umgebung thermisch verbundenen, die Membran tragenden Grundkörper der Druckmesszelle.

Dieses Problem wird gemäß der oben genannten EP 1 186 875 B1 dadurch gelöst, dass ein zweiter Temperatursensor in Richtung eines erwarteten Temperaturgradienten, nämlich in einer Verbindungsschicht zwischen der Membran und dem diese Membran tragenden Grundkörper angeordnet wird. Damit können Temperaturänderungen mit steilem Temperaturgradienten schnell erfasst werden, so dass Temperaturschocks von einer tatsächlichen Druckänderung unterscheidbar sind und kompensiert werden können.

Ein Nachteil dieser bekannten Lösung besteht darin, dass bei größeren Messbereichen (z. Bsp. 60 bar) eine Temperaturänderung aufgrund einer dicken Membran erst mit einer zeitlichen Verzögerung erfasst werden kann. Da jedoch thermoschockbedingte Messsignaländerungen sehr schnell erfolgen, ist die Fehlerkompensation mittels der beiden Temperatursensoren, insbesondere bei großen Messbereichen sehr ungenügend.

Des Weiteren ist die Herstellung einer solchen Druckmesszelle gemäß der EP 1 186 875 B1 sehr aufwändig und damit auch teuer, da die Einbringung eines Temperatursensors im Fügebereich zwischen der Membran und dem Grundkörper der Druckmesszelle sowie dessen Kontaktierung und Signalauswertung mit zusätzlichem Aufwand verbunden ist.

Weitere verwandte Sensoren sind aus der EP 1 596 174 A2, US 2007/0209443 A1 und WO 2008/001602 A1 bekannt.

Aufgabe der Erfindung ist es daher, ein Verfahren bereitzustellen, das eine Erfassung einer schnellen Temperaturänderung, also eines Thermoschocks ohne zeitliche Verzögerung mit nachfolgender Kompensation zulässt und eine Realisierung ohne zusätzliche Kosten erlaubt.

Diese Aufgabe wird gelöst durch ein Verfahren zur Detektion und zur Kompensation einer schnellen Temperaturänderung an einer Druckmesszelle mit den Merkmalen des Patentanspruchs 1.

Der Erfindung liegt die Erkenntnis zugrunde, dass eine druckbedingte Verformung der Membran im Vergleich zu einer thermoschockbedingten Membranverformung messtechnisch sich signifikant unterscheiden.

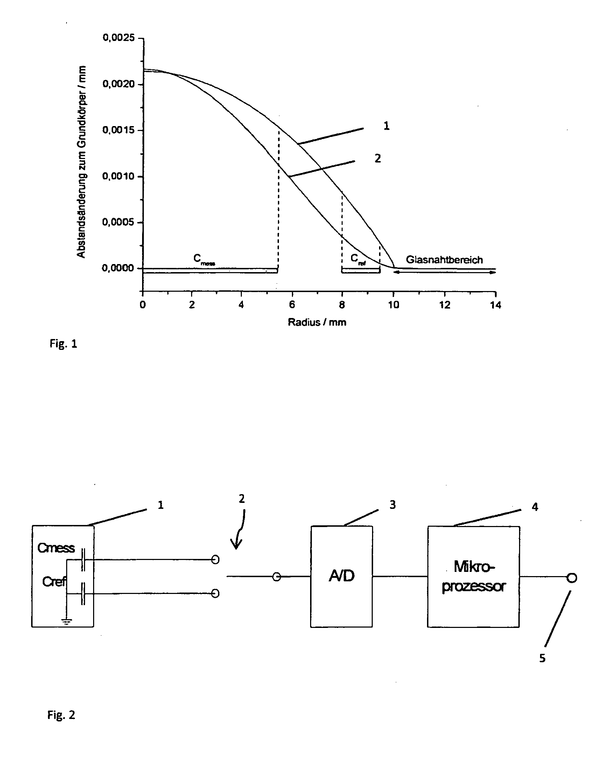

Hierzu zeigt die Figur 1 in einem Diagramm die Abhängigkeit der Abstandsänderung der Membran zum Grundkörper einer Druckmesszelle vom Abstand zum Mittelpunkt der Membran, also vom Mittelpunkt radial bis zum Rand, der in einen Glasnahtbereich übergeht. Gemessen wird mit einer Messkapazität Cₘₑₛₛ und einer Referenzkapazität C_{ref}, wobei eine kreisrunde Elektrode der Messkapaziät Cₘₑₛₛ mit einem Radius von ca. 5,5mm auf der gegenüberliegenden Seite der Membran zentrisch angeordnet ist und eine kreisringförmige Elektrode der Referenzkapazität C_{ref} beabstandet diese kreisrunde Elektrode umgibt. Die jeweilige zweite Elektrode wird von einer gemeinsamen Elektrode auf der gegenüberliegenden Innenseite der Membran gebildet.

Mit einer FEM(Finite-Elemente-Methode)-Simulation wurden die Kurven 1 und 2 erzeugt, wobei die Kurve 1 die Abstandsänderungen über dem Radius nach einem Thermoschock von 20° C auf 80° C nach 5s zeigt, während die Kurve 2 die Abstandsänderungen über dem Radius bei einem Unterdruck von 0,32bar darstellt. Insbesondere zeigt sich, dass unter einem Thermoschock die Membran im Randbereich in Bezug auf die vorliegende Verformung im Mittenbereich wesentlich stärker ausgelenkt wird, also bzgl. der Mittenverformung wesentlich größere Abstandsänderungen zeigt als unter einer Druckbelastung.

Dieses unterschiedliche Verhalten der Membran, insbesondere in deren Randbereich nutzt die Erfindung messtechnisch zur Detektion von thermoschockbedingten Membranverformungen aus, indem für die beiden Fälle die jeweilige Relation der Messwerte bzw. der Referenzwerte ausgewertet wird. Daher erfordert die Druckmesszelle gegenüber dem Stand der Technik keine zusätzlichen konstruktiven Maßnahmen, sondern es genügt zur Auswertung einen üblichen kostengünstigen Mikroprozessor einzusetzen, der auch zur Umsetzung der Messsignale der Sensoreinrichtungen in Messwerte erforderlich ist.

Zunächst wird für alle Messwerte, die von einer ersten Sensoreinrichtung erzeugt werden, ein Toleranzband für Erwartungswerte des jeweils zugehörigen Referenzwertes in einem Speicher des Mikroprozessors gespeichert, da bekannt ist, dass bei einer druckgedingten Auslenkung der Membran der Referenzwert in einem bestimmten Verhältnis zu dem Messwert stehen muss. Durch einen Vergleich der aktuell erzeugten Referenzwerte mit den Erwartungswerten aus dem Toleranzband wird entschieden, ob eine druckbedingte Auslenkung der Membran vorliegt oder eine durch eine schnelle Temperaturänderung, beispielsweise einen Thermoschock bedingte Auslenkung der Membran vorliegt. Im Fall einer Übereinstimmung mit einem Erwartungswert, wenn also der aktuelle Referenzwert in dem Toleranzband liegt, liegt eine druckbedingte Membranverformung vor, so dass der Messwert als aktueller Messwert des Drucks ausgegeben werden kann. Im anderen Fall wird eine schnelle Temperaturänderung, beispielsweise ein Thermoschock detektiert, mit der Folge der Korrektur des Messwertes mittels eines Korrekturwertes.

Da das gegenüber einer tatsächlichen Druckänderung unterschiedliche Verhalten der Membran bei einem Thermoschock ohne zeitliche Verzögerung auftritt, wird die Geschwindigkeit der Auswertung in vorteilhafter Weise nur durch die Arbeitsgeschwindigkeit des Mikroprozessors begrenzt. Auch gibt es hinsichtlich der Größe des Messbereichs keine Einschränkungen.

In einer bevorzugten Weiterbildung der Erfindung ist in einem Speicher des Mikroprozessors eine Korrekturwerttabelle gespeichert, die jedem Differenzwert zwischen einem Referenzwert und dessen Erwartungswert in Abhängigkeit der Änderungsrichtung einer durch eine schnelle Temperaturänderung bedingten Messwertänderung einen Korrekturwert zuordnet und bei einer Detektion einer schnellen Temperaturänderung, beispielsweise eines Thermoschocks, mittels des Mikroprozessors die Messwerte mit denjenigen Korrekturwerten aus der Korrekturtabelle korrigiert werden, die jeweils der Differenz aus dem Referenzwert und dem dem Messwert zugeordneten Erwartungswert zugeordnet sind. Die so korrigierten Messwerte werden als "wahre" Messwerte für den gemessenen Druck ausgegeben.

Hiermit lässt sich eine sehr genaue Korrektur des Messwertes durchführen, wenn zuvor die erforderlichen Korrekturwerte anhand von Messreihen an der Druckmesszelle unter unterschiedlichen Temperaturverläufen aufgenommen wurden.

In einer weiteren bevorzugten Weiterbildung erfolgt die Korrektur des Messwertes bei einer Detektion einer schnellen Temperaturänderung, beispielsweise eines Temperaturschocks, dadurch, dass mittels des Mikroprozessors die Integrationszeit zur Erzeugung der Messwerte aus den Messsignalen so lange verlängert wird, bis die Referenzwerte wieder in dem Toleranzband der Erwartungswerte der Referenzwerte liegen.

Dies stellt ein sehr einfaches und damit auch schnelles Korrekturverfahren dar, da gegenüber einer üblichen Signalauswertung keine zusätzlichen Verfahrensschritte erforderlich sind.

In einer vorteilhaften Weiterbildung der Erfindung werden die Messsignale und die Referenzsignale jeweils mittels eines kapazitiven Sensors erzeugt. Besonders vorteilhaft ist es, zur Erfassung der Auslenkung im zentralen Bereich der Membran den kapazitiven Sensor der ersten Sensoreinrichtung zentral auf der Membran und zur Erfassung der Auslenkung im Randbereich der Membran den kapazitiven Sensor der zweiten Sensoreinrichtung im Randbereich der Membran anzuordnen. Damit kann der oben beschriebene Effekt des unterschiedlichen Verhaltens der Membran unter einer Druckbelastung oder unter einem Thermoschock maximal ausgenutzt werden.

Die Erfindung wird nachfolgend anhand eines Ausführungsbeispiels unter Bezugnahme auf die beigefügten Figuren ausführlich beschrieben. Es zeigen:
- Figur 1: ein Diagramm zur Darstellung der Membranverformung unter einem Thermoschock und einer Druckbelastung,
- Figur 2: ein Blockschaltbild zur Auswertung der von einer Druckmesszelle erzeugten Signale.
- Figur 3: ein Diagramm zur Darstellung eines Toleranzbandes für die Erwartungswerte eines Referenzwertes in Abhängigkeit der Messwerte,
- Figur 4: ein Diagramm zur Ermittlung eines Korrekturwertes für den Messwert in Abhängigkeit der Abweichung eines Referenzwertes von dessen Erwartungswert.

Figur 1, die den Effekt des unterschiedlichen Verhaltens der Membran einer Druckmesszelle bei einer Druckbelastung und bei einem Thermoschock zeigt, wurde bereits in der Beschreibungseinleitung beschrieben.

Figur 2 zeigt schematisch eine Druckmesszelle 1, beispielsweise eine keramisch kapazitive Druckmesszelle, bei der als Sensoren ein Messkondensator Cₘₑₛₛ und ein Referenzkondensator C_{ref} auf einer Membran der Druckmesszelle angeordnet sind. Der Messkondensator Cₘₑₛₛ ist zentral auf der Membran angeordnet, um dort die Auslenkungen der Membran zu erfassen, während der Referenzkondensator C_{ref} den zentralen Messkondensator Cₘₑₛₛ kreisförmig umgibt und im Randbereich der Membran angeordnet ist.

Das von dem Messkondensator Cₘₑₛₛ erzeugte Messsignal bzw. das von dem Referenzkondensator C_{ref} erzeugte Referenzsignal wird einem Umschalter 2 zugeführt, der mit dem Eingang eines A/D-Wandlers 3 verbunden ist. Mit diesem Umschalter 2 werden die Signale des Messkondensator Cₘₑₛₛ und des Referenzkondensator C_{ref} abwechselnd gemessen, jeweils mit dem A/D-Wandler 3 digitalisiert und zur Erzeugung eines Messwertes Cₘ bzw. eines Referenzwertes Cᵣ und zu deren Auswertung einem Mikroprozessor 4 zugeführt, der einen Signalausgang 5 zur Verfügung stellt.

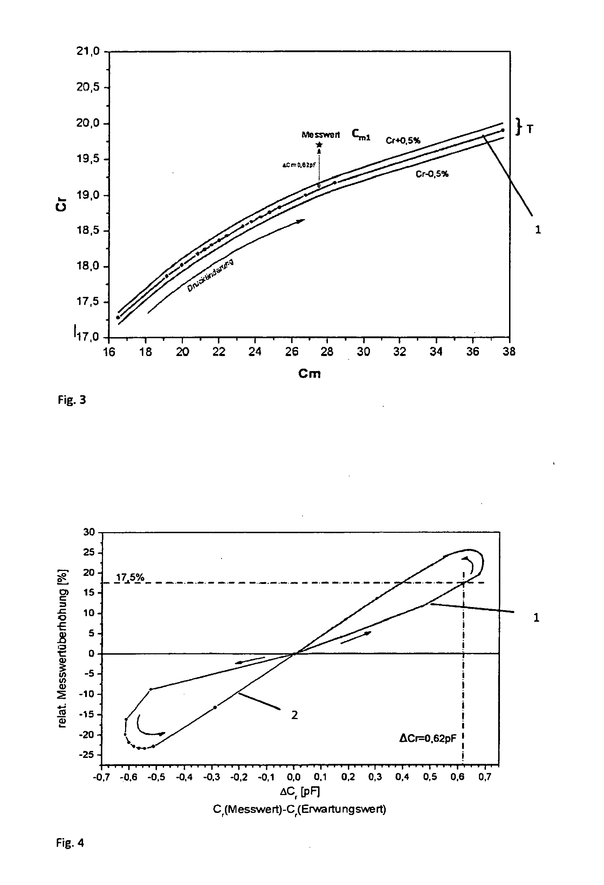

Wird mittels des Mikroprozessors 4 festgestellt, dass sich der Messwert Cₘ des Messkondensators Cₘₑₛₛ sehr schnell ändert, wird der Referenzwert Cᵣ des Referenzkondensators C_{ref} herangezogen, um festzustellen, ob dieser schnelle Anstieg des Messwertes auf einem Druckanstieg, also einer Druckbelastung der Membran beruht oder ob hierfür ein Thermoschock verantwortlich ist. Liegt die Ursache in einem schnellen Druckanstieg, so muss sich der Referenzwert Cᵣ ebenfalls entsprechend mit verändern, wie dies in dem Diagramm nach Figur 3 dargestellt ist.

In diesem Diagramm sind auf der x-Achse Kapazitätswerte des Messwertes Cₘ von 16pF bis 38pF, auf der y-Achse Kapazitätswerte des Referenzwertes Cᵣ von 17,0pF bis 21,0pF aufgetragen. Die annähernd lineare Kurve 1 stellt den Zusammenhang bei einer ansteigenden Druckänderung zwischen einem Messwert Cₘ und einem zugehörigen Referenzwert Cᵣ als Sollwert dar, wobei ein Toleranzband T vorgeben wird, das beispielhaft bei +/- 0,5% des Sollwertes des Referenzwertes liegt. Die in dem Toleranzband T liegenden Referenzwerte werden als Erwartungswerte der Referenzwerte bezeichnet.

Dieses Diagramm nach Figur 3 wird in einem Speicher des Mikroprozessors 4 abgelegt. Liegen die Wertepaare aus Messwert Cₘ und Referenzwert Cᵣ in dem Toleranzband T nach Figur 3, wird von einer Druckbelastung der Membran ausgegangen und der Mikroprozessor 4 gibt auf seine Signalausgang 5 den Messwert Cₘ als "wahren" Messwert für den Druck aus.

Liegt dieses Wertepaar nicht in dem Toleranzband T nach Figur 3 wird davon ausgegangen, dass eine schnelle Temperaturänderung, also ein Thermoschock vorliegt und daher der Messwert Cₘ vor Ausgabe auf den Signalausgang korrigiert werden muss. Beispielhaft ist ein solcher Messwert Cₘ₁ in Figur 3 eingezeichnet, dessen Referenzwert eine Differenz zu dem erwarteten Referenzwert, also zum zugehörigen Erwartungswert von ΔCᵣ=0, 62pF aufweist.

Die Ermittlung eines Korrekturwertes erfolgt mittels eines in Figur 4 dargestellten Diagrammes. Auf der x-Achse sind Differenzwerte ΔCᵣ in pF aufgetragen, wobei diese Differenzwerte ΔCᵣ sich aus der Differenz der Referenzwerte Cᵣ und des zugehörigen Erwartungswertes berechnen. Auf der y-Achse sind relative Messwertkorrekturen in %-Werten von -30% bis +30% aufgetragen. Die Hysteresekurve 1 zeigt den Verlauf der Korrekturwerte bei einem Thermoschock von heiß nach kalt, während die Hysteresekurve 2 umgekehrt den Verlauf der Korrekturwerte von kalt nach heiß zeigt. Die Pfeile an den Kurven 1 und 2 zeigen jeweils die Änderungsrichtung an.

Dieses Diagramm ist ebenfalls als Tabelle in dem Speicher des Mikroprozessors 4 gespeichert, der anhand dieser Tabelle einen Korrekturwert beispielsweise für den Messwert Cₘ₁ aus Figur 3 ermittelt.

Der auf der Abszisse ermittelte Wert ΔCᵣ=0, 62pF führt zu zwei Schnittpunkten mit der Kurve 1. Daher wird von dem Mikroprozessor zunächst die Änderungsrichtung des Messwertes bestimmt, um festzustellen auf welchem Ast der Hysteresekurve 1 sich der Messwert Cₘ₁ befindet. In Figur 4 wird der Schnittpunkt mit dem aufsteigenden Ast der Hysteresekurve 1 gewählt, der zu einem Korrekturwert von 17% führt. Damit wird der Messwert Cₘ₁ um 17,5% reduziert und als "wahrer" Messwert des Druckes auf den Signalausgang 5 des Mikroprozessors 4 gegeben.

Der Messwert Cₘ₁ kann auch auf eine andere Weise korrigiert werden. Zur Ermittlung eines Messwertes Cₘ oder eines Referenzwertes Cᵣ aus den entsprechenden Signalen werden die digitalisierten Signale über eine bestimmte Zeitdauer integriert. Diese Zeitdauer kann zur Kompensation des Messwertes Cₘ₁ verwendet werden, indem bei einer Detektion eines Thermoschocks die Integrationsdauer so lange fortgesetzt wird, bis der Referenzwert Cᵣ dieses Messwertes Cₘ₁ wieder in dem Toleranzband T nach Figur 3 liegt. Anschließend wird die Integrationszeit wieder auf einen üblichen Wert zurückgesetzt. Durch eine solche Integration, die eine Mittelwertbildung darstellt, können die durch einen Thermoschock bedingten Störeinflüsse auf die Membran beseitigt, zumindest jedoch erheblich abgeschwächt werden.

### Bezugszeichenliste

- 1: Druckmesszelle
- 2: Umschalter
- 3: A/D-Wandler
- 4: Mikroprozessor
- 5: Signalausgang

- Cₘₑₛₛ: Messkondensator
- Cₘ: Messwert aus Signal von Cₘₑₛₛ
- C_{ref}: Referenzkondensator
- Cᵣ: Referenzwert aus Signal von C_{ref}

## Patentansprüche

1. Verfahren zur Detektion und zur Kompensation eines Thermoschocks an einer Druckmesszelle (1), bei dem
- mittels einer in einem Mittelbereich einer druckbeaufschlagten Membran angeordneten ersten Sensoreinrichtung (Cₘₑₛₛ) ein von der Auslenkung der Membran abhängiges Messsignal erzeugt wird,
- mittels einer in einem Randbereich der druckbeaufschlagten Membran angeordneten zweiten Sensoreinrichtung (C_{ref}) ein von der Auslenkung der Membran abhängiges Referenzsignal erzeugt wird, und
- mittels eines Mikroprozessors (4) aus dem Messsignal Messwerte (Cₘ) und aus dem Referenzsignal zugehörige Referenzwerte (Cᵣ) erzeugt werden,
**dadurch gekennzeichnet, dass**
- für alle Messwerte, die von der ersten Sensoreinrichtung erzeugt werden, ein Toleranzband (T) für Erwartungswerte der jeweils zugehörigen Referenzwerte (Cᵣ) in einem Speicher des Mikroprozessors (4) gespeichert ist, und
- die aktuell erzeugten Messwerte (Cₘ) und zugehörigen Referenzwerte (Cᵣ) mit den Erwartungswerten aus dem Toleranzband (T) verglichen werden, und entweder
- bei Übereinstimmung eine druckbedingte Auslenkung der Membran detektiert wird, und die Messwerte (Cₘ) als Messwerte für den gemessenen Druck ausgegeben werden, oder
- bei Nichtübereinstimmung eine durch einen Thermoschock bedingte Auslenkung der Membran detektiert wird, die Messwerte (Cₘ) mit einem Korrekturwert korrigiert werden und die korrigierten Messwerte als Messwerte für den gemessenen Druck ausgegeben werden.

2. Verfahren nach Anspruch 1,
**dadurch gekennzeichnet, dass**
- in dem Speicher des Mikroprozessors (4) eine Korrekturwerttabelle gespeichert ist, die jedem Differenzwert zwischen einem außerhalb des Toleranzbandes (T) liegenden Referenzwert (Cᵣ) und dessen Erwartungswert in Abhängigkeit der Änderungsrichtung einer durch einen Thermoschock bedingten Messwertänderung einen Korrekturwert zuordnet,
und
- bei einer Detektion einer schnellen Temperaturänderung mittels des Mikroprozessors (4) die Messwerte (Cₘ) mit denjenigen Korrekturwerten aus der Korrekturtabelle korrigiert werden, die jeweils der Differenz aus dem Referenzwert (Cᵣ) und dem dem Messwert zugeordneten Erwartungswert zugeordnet sind.

3. Verfahren nach Anspruch 1,
**dadurch gekennzeichnet, dass**
- bei einer Detektion eines Thermoschocks die Messwerte (Cₘ) korrigiert werden, indem mittels des Mikroprozessors (4) die Integrationszeit zur Erzeugung der Messwerte (Cₘ) aus den Messsignalen so lange verlängert wird, bis die Referenzwerte (Cᵣ) wieder in dem Toleranzband (T) der Erwartungswerte der Referenzwerte (Cᵣ) liegen.

4. Verfahren nach einem der vorangehenden Ansprüche,
**dadurch gekennzeichnet, dass** die Messsignale und die Referenzsignale jeweils mittels eines kapazitiven Sensors (Cₘₑₛₛ, C_{ref}) erzeugt werden.

5. Verfahren nach Anspruch 4,
**dadurch gekennzeichnet, dass** zur Erfassung der Auslenkung im zentralen Bereich der Membran der kapazitive Sensor (Cₘₑₛₛ) der ersten Sensoreinrichtung zentral auf der Membran und zur Erfassung der
Auslenkung im Randbereich der Membran der kapazitive Sensor (C_{ref}) der zweiten Sensoreinrichtung im Randbereich der Membran angeordnet ist.

## Claims

1. Procedure for the detection of, and compensation for, a thermoshock to a pressure measurement cell (1), in which
- a measurement signal dependent on the displacement of the membrane is produced by means of a first sensor device (Cₘₑₛₛ), positioned in the central area of a pressurised membrane,
- a measurement signal dependent on the displacement of the membrane is produced by means of a second sensor device (C_{ref}), positioned in a peripheral area of the pressurised membrane and
- measured values (Cₘ) are produced from the measurement signal, and related reference values (Cᵣ) from the reference signal, by means of a microprocessor (4); this procedure is **characterised by** the fact that
- A tolerance range (T) of expected values of the respective related reference values (Cᵣ) is stored in the memory of a microprocessor (4) for all measured values produced by the first sensor device, and
- the actually produced measured values (Cₘ) and related reference values (Cᵣ) are compared with the expected values from the tolerance range (T), and either
- a pressure conditioned displacement is detected where there is agreement of the values, and these values (Cₘ) are displayed as the values for the measured pressure, or
- a thermoshock is detected where the values disagree; in this case the measures values (Cₘ) are corrected with a correcting value, and these corrected values are displayed as the values for the measured pressure.

2. Procedure in accordance with Claim 1, **characterised by** the fact that
- a table of correcting values is stored in the memory of a microprocessor (4), which applies a correcting value to every difference in value between a reference value (Cᵣ) lying outside the tolerance range (T) and its expected value as a function of the direction of change in a value conditioned by a thermoshock, and
- on detection of a quick temperature change by means of the microprocessor (4), the measured values (Cₘ) are corrected by those values from the table of corrections which are in each case assigned to the difference between the reference value (Cᵣ) and that assigned to the measured value.

3. Procedure in accordance with Claim 1, **characterised by** the fact that
- on detection of a thermoshock, the measured values (Cₘ) are corrected by means of the microprocessor (4), in that the integration time to production of the values (Cₘ) from the measurement signals is extended to the point where the reference values (Cᵣ) are again lying in the tolerance range (T) of expected values.

4. Procedure in accordance with one of the foregoing claims, **characterised by** the fact that the measurement signals and the reference signals are in each case produced by means of a capacitive sensor (Cₘₑₛₛ, C_{ref}).

5. Procedure in accordance with Claim 4 **characterised by** the fact that, to record the displacement in the central area of the membrane, the capacitive sensor (Cₘₑₛₛ) of the first sensor device is positioned centrally on the membrane, and to record the displacement on the periphery of the membrane, the capacitive sensor (C_{ref}) of the second sensor is positioned in the peripheral area of the membrane.

## Revendications

1. Procédé de détection et de compensation d'un thermo-choc sur une cellule de mesure de pression (1) selon lequel :
- au moyen d'un premier dispositif de capteur (Cₘₑₛₛ) monté dans la zone médiane d'une membrane soumise à la pression on produit un signal de mesure dépendant du déplacement de la membrane,
- au moyen d'un second dispositif de capteur (C_{ref}) monté dans une zone du bord de la membrane soumise à la pression on produit un signal de référence dépendant du déplacement de la membrane, et
- au moyen d'un microprocesseur (4), on produit à partir du signal de mesure des valeurs de mesure (Cₘ) et à partir du signal de référence des valeurs de référence (Cᵣ) associées,
**caractérisé en ce que**
- pour toutes les valeurs de mesure qui sont produites par le premier dispositif de capteur, on enregistre dans une mémoire du microprocesseur (4) une bande de tolérance (T) pour des valeurs attendues des valeurs de référence (Cᵣ) respectivement associées, et
- on compare les valeurs de mesure (Cₘ) actuellement produites et les valeurs de référence (Cᵣ) associées avec les valeurs attendues issues de la bande de tolérance (T), et
- en cas de concordance, on détecte un déplacement conditionné par la pression de la membrane et l'on délivre les valeurs de mesure (Cₘ) en tant que valeurs de mesure pour la pression mesurée, ou
- en cas d'absence de concordance, on détecte un déplacement de la membrane conditionné par un thermo-choc, on corrige les valeurs mesurées (Cₘ) avec une valeur de correction, et l'on délivre les valeurs de mesure corrigées en tant que valeurs de mesure de la pression mesurée.

2. Procédé conforme à la revendication 1,
**caractérisé en ce que** :
- dans la mémoire du microprocesseur (4) on enregistre un tableau de valeurs de correction qui associe une valeur de correction à chaque valeur de différence entre une valeur de référence (Cᵣ) située à l'extérieur de la bande de tolérance (T) et sa valeur attendue en fonction du sens d'une variation de valeur de mesure conditionnée par un thermo-choc, et
- en cas de détection d'une variation rapide de température, on corrige, au moyen du microprocesseur (4) les valeurs de mesure (Cₘ) avec les valeurs de correction issues du tableau de correction qui sont respectivement associées à la différence entre la valeur de référence (Cᵣ) et la valeur attendue associée à la valeur de mesure.

3. Procédé conforme à la revendication 1,
**caractérisé en ce que**
en cas de détection d'un thermo-choc, on corrige les valeurs de mesure (Cₘ) en prolongeant, au moyen du microprocesseur (4) la durée d'intégration permettant de produire la valeur de mesure (Cₘ) à partir des signaux de mesure jusqu'à ce que les valeurs de référence (Cᵣ) soient à nouveau situées dans la bande de tolérance (T) des valeurs attendues des valeurs de référence (Cᵣ).

4. Procédé conforme à l'une des revendications précédentes,
**caractérisé en ce que**
les signaux des mesure et les signaux de référence sont respectivement produits au moyen d'un capteur capacitif (Cₘₑₛₛ, C_{ref}).

5. Procédé conforme à la revendication 4,
**caractérisé en ce que**
pour déterminer le déplacement dans la zone centrale de la membrane, le capteur capacitif (Cₘₑₛₛ) du premier dispositif de capteur est monté au centre de la membrane, et, pour déterminer le déplacement dans la zone du bord de la membrane, le capteur capacitif (C_{ref}) du second dispositif de capteur est monté dans la zone du bord de la membrane.
